# EUROPÄISCHE PATENTSCHRIFT

(11) **EP 1 486 179 B1**
(45) Veröffentlichungstag und Bekanntmachung des Hinweises auf die Patenterteilung: **14.06.2006**
(21) Anmeldenummer: 04013335.7
(22) Anmeldetag: 07.06.2004
(51) Int. Cl.: A61C 1/14

(54) **Spannvorrichtung**
Straining device
Tendeur

(30) Priorität: 12.06.2003 AT 9092003
(43) Veröffentlichungstag der Anmeldung: 15.12.2004
(73) Patentinhaber: W & H Dentalwerk Bürmoos GmbH, 5111 Bürmoos (AT)
(72) Erfinder: Fuchs, Hans-Werner, 5121 Ostermiething (AT)

(56) Entgegenhaltungen:
- DE-A- 2 342 680
- GB-A- 848 540
- GB-A- 893 888
- US-A- 2 845 274
- US-A- 3 321 209
- US-A- 5 259 405

## Beschreibung

Die Erfindung betrifft eine Spannvorrichtung zur Verwendung in medizinischen, insbesondere dental-medizinischen Hand- und Winkelstücken zur lösbaren Aufnahme eines rotierenden Behandlungswerkzeugs, zum Beispiel eines Dentalbohrers. Insbesondere bezieht sich die Erfindung auf eine Spannvorrichtung die das Behandlungswerkzeug mittels Spannlaschen festklemmt.

Eine derartige Spannvorrichtung ist beispielsweise aus der DE-OS 23 426 80 bekannt. Sie besteht aus einer metallischen Innenhülse aus der durch das Einarbeiten von Schlitzen Stege entstehen. Diese Innenhülse ist von einer Außenhülse aus elastischem Werkstoff umgeben. Bei der Montage werden die beiden Hülsen ineinander gefügt und anschließend in den Rotor eingesetzt. Die Durchmesser der beiden Hülsen und der Bohrung des Rotors sind dabei so gewählt, daß beim Ineinanderfügen die elastische Außenhülse und in Folge der geschlitzte Teil der Innenhülse radial nach innen zusammengedrückt werden. Der Durchmesser der damit entstandenen Verengung der Bohrung der Innenhülse ist kleiner als der Außendurchmesser des Werkzeugschafts. Wird der Werkzeugschaft in die Spannhülse eingesetzt, so drückt er den verengten Teil der metallischen Innenhülse nach außen, wodurch die elastische Außenhülse zusammengepreßt und verformt wird. Die Federwirkung und Haltekraft, die das Werkzeug in der Spannvorrichtung hält, wird durch die Rückstellkraft der zusammengepreßten und verformten elastischen Außenhülse, übertragen auf die metallische Innenhülse, erzeugt.

In der GB 893,888 ist eine Spannvorrichtung mit mehreren Schlitzen offenbart, wobei die Abschnitte zwischen den Schlitzen die radial nach innen gebogenen, federnden Spannlaschen bilden. Die Spannlaschen sind aus dem gesamten Umfang der Zyiindrischen Wand der Spindel gebildet. Um eise ausreichende Stabilität insbesondere beim Einwirken von Kräften (wie z.B. dem Einsetzen des Bohrers in die Spannvorrichtung oder während des Betriebs) zu gewährleisten, ist die Spindel in einer weiteren Hülse gelagert. Die Hülse dient auch als Sitz für das Laufrad und die Kugellager.

Nachteilig ist bei beiden Spannvorrichtungen die Anzahl der Bauteile aus denen die Spannvorrichtungen hergestellt sind, verbunden mit zusätzlichen Fertigungskosten und erhöhtem Montageaufwand.

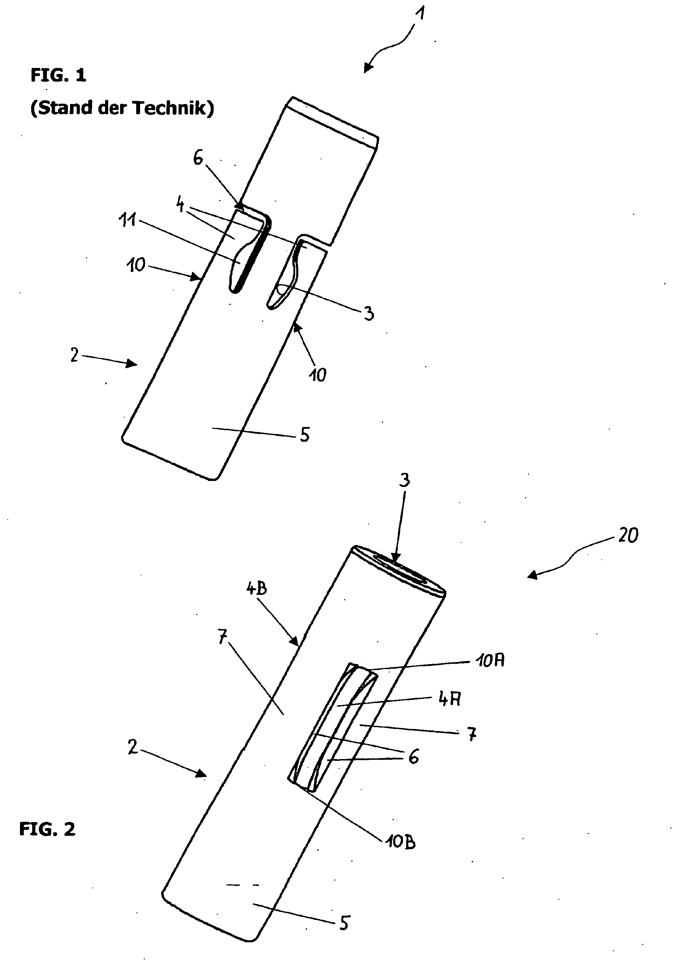

Die Patentanmelderin stellt daher seit mehreren Jahren eine Spannvorrichtung 1 her, die aus einem einzigen Bauteil gefertigt wird (Figur 1, Stand der Technik). Dabei wird in einem ersten Bearbeitungsschritt an einer Dreh-Maschine in einen Metallzylinder (Spindel) 2 eine zentrischen Bohrung 3 für die Aufnahme des Werkzeugschafts gedreht. In einem weiteren Bearbeitungsschritt werden die Spannlaschen 4 an einer Drahterodiermaschine aus der Spindel 2 herausgearbeitet, wobei gemäß Figur 1 jede Spannlaschen 4 nur an einer Kontaktstelle 10 mit dem Mantel 5 der Spindel 2 verbunden bleibt. Abschließend werden die Spannlaschen 4 radial geringfügig nach innen (in die Bohrung 3) gedrückt. Die Federwirkung und Haltekraft zum Festklemmen des Werkzeugs geht in diesem Fall ausschließlich durch die nach Innen gedrückten Spannlaschen 4 aus. Das Laufrad, das mittels Druckluft angetrieben wird und die Spannvorrichtung 1 und das Werkzeug in Rotation versetzt, kann direkt auf die Spindel 2 gesetzt werden, so daß die Spannvorrichtung 1 aus einem einzigen Bauteil besteht.

Nachteilig bei dieser Spannvorrichtung ist die zeit- und kostenaufwendige Produktion, für die zwei Maschinen (Dreh-Maschine, Erodiermaschine) benötigt werden sowie insbesondere das sehr kostenintensive Erodieren. Der Erodiervorgang ist notwendig, da der Schlitz 6, durch dessen Herausarbeitung die Spannlaschen 4 entstehen, keine einheitliche Breite sondern einen vergrößerten Endabschnitt 11 aufweist. Dieser dient dazu Rißbildungen im Mantel 5 der Spindel 2, welche die Spindel unbrauchbar machen bzw. ihre Lebensdauer deutlich reduzieren würden, beim Biegen der Laschen 4 radial in die Bohrung 3 zu unterbinden.

Es besteht daher der dringende Bedarf an einer neuartigen, zuverlässigen Spannvorrichtung mit verringertem Herstellungs- und Montageaufwand.

Diese Aufgabe wird gemäß der vorliegenden Erfindung durch eine Spannvorrichtung nach Anspruch 1 und einem Verfahren gemäß Anspruch 11 gelöst. Besonders vorteilhafte Ausführungsformen sind in den jeweiligen Unteransprüchen angeführt.

Bei der erfindungsgemäßen Spannvorrichtung nach Anspruch 1 wird das Behandlungswerkzeug ausschließlich durch die von der mindestens einen Spannlasche erzeugten und ausgeübten Federwirkung und Haltekraft fixiert. Überraschenderweise kann dies auch mit einer Spannlasche, die an zumindest zwei Kontaktstellen eine nicht lösbare Verbindung mit dem Mantel der Spannvorrichtung aufweist, erreicht werden. Ein an die Spannlasche anschließender Abschnitt des Mantels in Form eines Stegs stabilisiert die Spannvorrichtung. Eine derartige Spannvorrichtung hat den Vorteil, daß gemäß Anspruch 11 das Herausarbeiten der mindestens einen Spannlasche aus dem Mantel der Spannvorrichtung ausschließlich durch mechanische Bearbeitung (Zerspanen), bevorzugt durch Drehen und/oder Fräsen, und gemäß Anspruch 14 insbesondere an einer einzigen Maschine erfolgt und der Erodiervorgang entfällt.

Die Herstellung der Spannvorrichtung läuft bevorzugt in folgenden Schritten ab: Zuerst wird aus einem Metallzylinder eine zentrische Bohrung für die Aufnahme des Werkzeugschafts herausgearbeitet, so daß der zylindrischer Außenmantel der Spannvorrichtung entsteht. In diesen werden beginnend von der Mantelaußenfläche radial nach Innen Schlitze eingearbeitet, bevorzugt eingefräst. Der jeweils zwischen zwei Schlitzen verbleibende Abschnitt, der an zumindest zwei Kontaktstellen unlösbar mit dem Mantel der Spannvorrichtung verbunden ist, bildet eine Spannlasche. Diese wird in einem weiteren Schritt radial nach Innen eingepreßt, so daß die lichte Weite zwischen der nach innen gebogenen Spannlasche und der Innenwand des Mantels geringer ist als der Durchmesser des Werkzeugschafts.

In einem bevorzugten Ausführungsbeispiel ist die Wandstärke zumindest jenes Bereichs des Außenmantels, aus dem die Spannlasche entsteht, geringer als die des übrigen Mantelbereichs, so daß das nach innen Biegen der Spannlasche erleichtert und die Federwirkung der Spannlasche erhöht wird. Die Verringerung der Wandstärke kann in einem besonders bevorzugten Ausführungsbeispiel vor dem Fräsen der Schlitze ebenfalls durch Ausfräsen erfolgen.

Beim Einsetzen des Behandlungswerkzeugs in die Spannvorrichtung wird die Spannlasche durch den Schaft radial nach außen verdrängt. Die zum Festklemmen des Werkzeugs benötigte Haltekraft resultiert aus der Rückstellkraft der verdrängten Spannlasche. Wird das Behandlungswerkzeug aus der Spannvorrichtung entnommen, so ist die Federwirkung der Spannlasche ausreichend damit diese selbständig in ihre Ausgangsstellung zurückzukehren.

Um gleichermaßen die gemäß Norm EN ISO 7785-1 verlangte Haltekraft für das Behandlungsinstrument, sowie die gewünschte Federkraft und die für einen häufigen Bohrerwechsel benötigte Verschleißfestigkeit zu gewährleisten, wird in einem bevorzugten Ausführungsbeispiel die mindestens einen Spannlasche aus einem Werkstoff mit einer Zugfestigkeit von größer 1.000 MPa und/oder einem E-Modul von 110 GPa bis 220 GPa, besonders bevorzugt aus Edelstahl mit einem E-Modul von 190 GPa bis 220 GPa gefertigt.

In einem Ausführungsbeispiel wird die Spannvorrichtung mit mehr als einer, bevorzugt mit zwei bis vier, besonders bevorzugt mit drei Spannlaschen ausgestattet. Dadurch kann die Rundlaufeigenschaft des Behandlungswerkzeugs verbessert und die Haltekraft auf mehrere Spannlaschen verteilt werden.

In einem Ausführungsbeispiel erhält die mindestens eine Spannlasche eine asymmetrische Form, bevorzugt erfolgt diese Verformung gleichzeitig mit dem Einpressen der Spannlaschen in die Bohrung der Spindel. In einem besonders bevorzugten Ausführungsbeispiel befindet sich der Scheitelpunkt (d.h. jener Punkt, der am weitesten in das Innere der Bohrung der Spindel ragt) der kurvenförmig verlaufenden Spannlasche in der oberen Hälfte, insbesondere bei etwa 2/3 der Gesamtlänge der Spannlasche, bezogen auf die Öffnung der Spannvorrichtung durch die das Werkzeug in die Spannvorrichtung eingeführt wird. Durch diese besondere Formgebung wird sowohl das Einsetzen des Werkzeuges als auch die Fixierung während des Betriebs des Turbinenhandstücks optimiert: Beim Einschieben des Werkzeugs in die Spannvorrichtung ist der Anstieg der Spantilasche und somit die Kraft, die benötigt wird gering. Ist das Werkzeug hingegen in der Spannvorrichtung fixiert, so muß, um es daraus zu lösen, zuerst der steile Anstieg der Spannlasche überwunden werden, wozu mehr Kraft benötigt wird. Damit wird die Gefahr eines unbeabsichtigten Lösens, insbesondere während der Behandlung, weiter verringert.

In einem weiteren Ausführungsbeispiel ist die Länge der Spannlaschen bzw. der Schlitze geringer als die Höhe des Turbinenlaufrads. Wird das Turbinenlaufrad exakt über den Spannlaschen befestigt und somit ein vollkommenes Abdecken der Schlitze verwirklicht, so verhindert dies das Eindringen von Verunreinigungen wie zum Beispiel Speichel, Blut oder Gewebeteilen während der Behandlung über das Werkzeug und die Spannvorrichtung in das Innere des Turbinenhandstücks.

Das Einsetzen des Bohrers in die Spannvorrichtung als auch das Lösen des Bohrers aus der Spannvorrichtung kann der Anwender ohne Hilfsmittel durchführen.

Um insbesondere das Lösen des Bohrers zu erleichtern besteht die Möglichkeit Hilfsmittel, bevorzugt dem Fachmann bekannte Bohrerausstoßer, zu verwenden.

Die Erfindung wird nachfolgend anhand bevorzugter Ausführungsbeispiele und Bezug nehmend auf die beigefügten Zeichnungen erläutert:
- Figur 1: zeigt eine Spannvorrichtung gemäß dem Stand der Technik.
- Figur 2: zeigt eine erfindungsgemäße Spannvorrichtung.
- Figur 3: zeigt einen Turbinenkopf mit der erfindungsgemäßen Spannvorrichtung.
- Figur 4: zeigt einen Bohrerausstoßer zum Lösen eines eingespannten Werkzeugs aus der erfindungsgemäßen Spannvorrichtung.
- Figur 5: zeigt eine bevorzugte asymmetrische Ausführungsform einer Spannlasche einer erfindungsgemäßen Spannvorrichtung.

Gleiche Bauteile sind in allen Darstellungen mit denselben Ziffern beschriftet.

Figur 2 zeigt eine erfindungsgemäße Spannvorrichtung 20 mit drei gleichmäßig voneinander beabstandeten Spannlaschen. Die Spannvorrichtung 20 besteht aus einer Spindel 2 mit einer zentrischen Bohrung 3 für die Aufnahme eines Werkzeugschafts (nicht dargestellt). Alle drei Spannlaschen sind durch Einfügen jeweils zweier Schlitze 6 in den Mantel 5 der Spindel 2 herausgearbeitet, so wie es beispielhaft an der Spannlasche 4A ersichtlich ist. Jede Spannlasche ist an jeweils zwei Kontaktstellen 10A und 10B mit dem Mantel 5 der Spannvorrichtung 20 unlösbar verbunden. Die Spannlaschen sind radial nach innen gebogen, so daß die lichte Weite zwischen der nach innen gebogenen Spannlasche 4 und der Innenwand des Mantels 5 geringer ist als der Durchmesser des Werkzeugschafts.

Links der Spannlasche 4A kann ansatzweise eine zweite Spannlasche 4B erkannt werden. Zwischen den Spannlaschen bzw. den jeweiligen Schlitzen 6 befinden sich die Stege 7. Bei der Herstellung der Spannvorrichtung 20 kann die Breite der Stege 7 und / oder der Spannlaschen 4 durch Variation der Breite der Schlitze 6 bzw. durch Verschieben der Positionen, an denen die Schlitze angeordnet sind, beliebig verändert werden. Weiters kann auch die Wandstärke der Stege 7 und / oder der Spannlaschen 4 bevorzugt durch mechanische Bearbeitung der Oberfläche des Mantels 5, besonders bevorzugt durch Fräsen, verändert werden. Die Variation der Breite und/oder der Wandstärke der Stege 7, die maßgeblich die Stabilität der gesamten Spannvorrichtung 20 beeinflussen, bzw. der Spannlaschen 4, über die die Haltekraft für die einzuspannenden Werkzeuge ausgeübt wird, ermöglicht somit eine exakte Abstimmung der Spannvorrichtung 20 auf unterschiedliche Werkzeuge und Behandlungsmethoden.

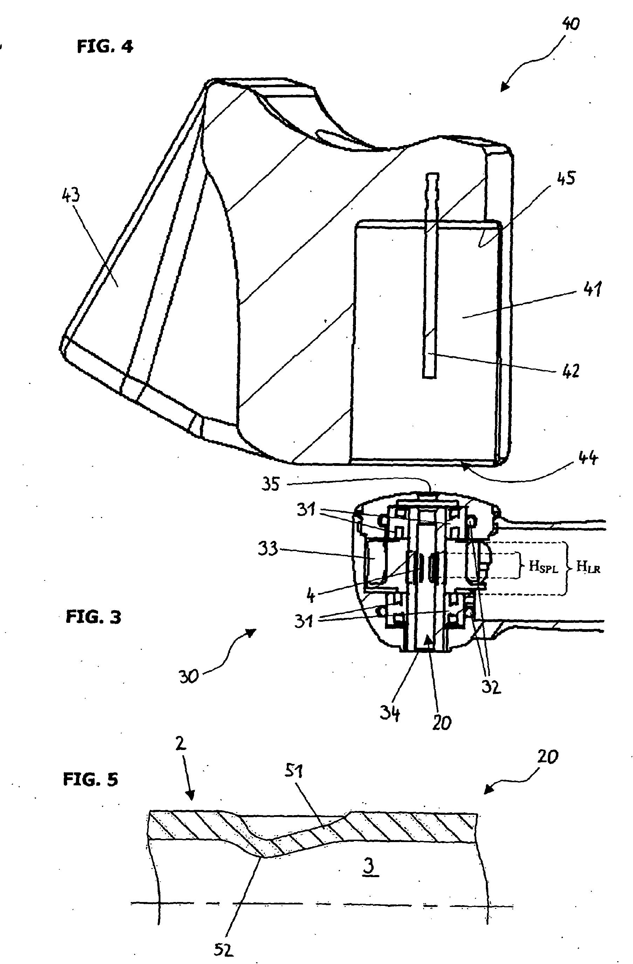

Figur 3 zeigt die erfindungsgemäße Spannvorrichtung 20 durch zwei Kugellager 31 und O-Ringe 32 drehbar im Kopf 30 eines Turbinenhandstücks gelagert. Auf der Spannvorrichtung 20 ist das Laufrad 33 bevorzugt durch einen Preßsitz befestigt. Das Laufrad 33 wird mit Druckluft beaufschlagt und versetzt die Spannvorrichtung 20 und ein über die Werkzeugaufnahmeöffnung 34 eingeführtes und durch die Spannlaschen 4 fixiertes Werkzeug in Rotation. Die Länge H_{SPL} der Spannlaschen 4 bzw. der Schlitze 6 ist geringer als die Höhe H_{LR} des Laufrads 33, so daß das Laufrad 33 die Spannlaschen 4 und Schlitze 6 vollständig abdeckt und somit das Eindringen von Verunreinigungen und Partikeln in den Innenraum des Turbinenhandstücks verhindert.

Zum erleichterten Lösen des eingespannten Werkzeugs aus der Spannvorrichtung 20 kann ein Bohrerausstoßer 40, wie er in Figur 4 dargestellt ist, verwendet werden. Dieser besteht aus einem Griffkörper 43, bevorzugt mit einer strukturierten Oberfläche zur besseren Handhabbarkeit und zumindest einer Kammer 41. Die Abmessungen der Kammer 41 sind so gewählt, daß der Kopf 30 des Turbinenhandstücks durch die Öffnung 44 in die Kammer 41 geschoben werden kann. Aus der der Öffnung 44 gegenüberliegenden Fläche 45 der Kammer 41 ragt ein Stift 42, dessen Durchmesser so bemessen ist, daß er nicht größer als die lichte Weite der Spindel 2 ist. Zum Lösen des Werkzeugs wird der Kopf 30 des Turbinenhandstücks durch die Öffnung 44 in die Kammer 41 geschoben, wodurch der Stift 42 über eine Öffnung 35 (Figur 3), die sich auf der der Werkzeugaufnahme öffnung 34 gegenüberliegenden Seite des Kopf 30 des Turbinenhandstücks befindet, in die Bohrung 3 der Spindel 2 eindringt und das eingespannte Werkzeug aus der Spannvorrichtung 20 austreibt. Die Länge des Stifts 42 ist bevorzugt so bemessen, daß der Stift 42 den eingespannten Werkzeugschaft zumindest zur Gänze aus der Fixierung der Spannlaschen löst.

Figur 5 zeigt in einer Schnittdarstellung durch eine erfindungsgemäße Spannvorrichtung 20 eine asymmetrisch verformte Spannlasche 51. Die Werkzeugaufnahme öffnung 34 (siehe Figur 3) der Spannvorrichtung 20 durch die das Werkzeug in die Spannvorrichtung 20 eingeführt wird befindet sich hierbei auf der rechten Seite. Die Spannlasche 51 ist derart verformt, daß der Scheitelpunkt 52 (d.h. jener Punkt, der am weitesten in das Innere der Bohrung 3 der Spindel 2 ragt) der kurvenförmig verlaufenden Spannlasche 51 in der oberen Hälfte, bei etwa 2/3 der Gesamtlänge der Spannlasche angeordnet ist.

Die Erfindung ist nicht auf die dargestellten Ausführungsbeispiele beschränkt.

## Patentansprüche

1. Spannvorrichtung (20) für ein medizinisches Behandlungswerkzeug mit einem Mantel (5), einer Bohrung (3) zur Aufnahme des Werkzeugschafts eines Behandlungswerkzeugs und mindestens einer Spannlasche (4A, 4B), die an mindestens zwei Kontaktstellen (10A, 10B) mit dem Mantel (5) der Spannvorrichtung (20) unlösbar verbunden ist und in das Innere der Bohrung (3) gebogen ist, wodurch die lichte Weite der Bohrung (3) durch die nach innen ragenden Spannlasche (4A, 4B) geringer ist als der Durchmesser des Werkzeugschafts, so daß ein in der Bohrung (3) aufgenommener Werkzeugschaft die zumindest eine Spannlasche (4A, 4B) radial nach außen verdrängt und die Spannlasche (4A, 4B) den Werkzeugschaft in der Bohrung (3) festklemmt, wobei ausschließlich die mindestens eine Spannlasche (4A, 4B) die zum Festklemmen des Behandlungswerkzeugs benötigte Federwirkung und Haltekraft erzeugt und ausübt
**dadurch gekennzeichnet, daß**
die Spannvorrichtung (20) des Weiteren zumindest einen Steg (7) umfaßt, der durch einen an die zumindest eine Spannlasche (4A, 4B) anschließenden Abschnitt des Mantels (5) gebildet ist und insbesondere diesen Abschnitt der Spannvorrichtung (20) stabilisiert.

2. Spannvorrichtung (20) nach Anspruch 1,
**dadurch gekennzeichnet, daß**
die mindestens eine Spannlasche (4A, 4B) aus einem Werkstoff mit einer Zugfestigkeit von größer 1.000 MPa und/oder einem E-Modul von 110 GPa bis 220 GPa, besonders bevorzugt aus Edelstahl mit einem E-Modul von 190 GPa bis 220 GPa, gefertigt ist.

3. Spannvorrichtung (20) nach einem der vorhergehenden Ansprüche,
**dadurch gekennzeichnet, daß**
sie mehrere, bevorzugt zwei, drei oder vier Spannlaschen (4A, 4B) aufweist.

4. Spannvorrichtung (20) nach einem der vorhergehenden Ansprüche,
**dadurch gekennzeichnet, daß**
die Wandstärke der zumindest einen Spannlasche (4A, 4B) und/oder des zumindest einen Stegs (7) geringer ist als im übrigen Mantelbereich.

5. Spannvorrichtung (20) nach einem der vorhergehenden Ansprüche,
**dadurch gekennzeichnet, daß**
auf der Spindel (2) der Spannvorrichtung (20) zumindest ein Lager (31) zur drehbaren Lagerung der Spannvorrichtung (20) in einem Handstück befestigbar ist.

6. Spannvorrichtung (20) nach einem der vorhergehenden Ansprüche, **dadurch gekennzeichnet, daß**
auf der Spindel (2) der Spannvorrichtung (20) ein Laufrad (33) eines Turbinenhandstücks befestigbar ist.

7. Spannvorrichtung (20) nach Anspruch 6,
**dadurch gekennzeichnet, daß**
das Laufrad (33) über der zumindest einen Spannlasche (4A, 4B) befestigt ist, wobei die Länge H_{SPL} der zumindest einen Spannlasche (4A, 4B) geringer ist als die Höhe H_{LR} des Laufrads (33).

8. Spannvorrichtung (20) nach einem der vorhergehenden Ansprüche,
**gekennzeichnet durch**
zumindest eine asymmetrisch geformte Spannlasche (4A, 4B)

9. Spannvorrichtung (20) nach Anspruch 8,
**dadurch gekennzeichnet, daß**
sich der Scheitelpunkt (52) der zumindest einen Spannlasche (4A, 4B) in der oberen Hälfte, insbesondere bei etwa 2/3 der Gesamtlänge der Spannlasche (4A, 4B), bezogen auf die Öffnung (34) der Spannvorrichtung (20) durch die das Werkzeug in die Spannvorrichtung (20) einführbar ist, befindet.

10. Spannvorrichtung (20) nach einem der vorhergehenden Ansprüche,
**dadurch gekennzeichnet, daß**
das Lösen des Werkzeugs aus der Spannvorrichtung (20) mit Hilfe eines Bohrerausstoßers (40) erfolgt.

11. Verfahren zur Herstellung einer Spannvorrichtung (20) für ein medizinisches Behandlungswerkzeug nach einem der vorhergehenden Ansprüche,
**dadurch gekennzeichnet, daß**
durch mechanische Bearbeitung (Zerspanen), bevorzugt durch Fräsen, zumindest zwei Schlitze (6) in den Mantel (5) der Spannvorrichtung (20) eingearbeitet werden so daß der zwischen den Schlitzen (6) verbleibende Abschnitt eine Spannlasche (4A, 4B) und die auf die Schlitze (6) folgenden Abschnitte einen Steg (7) bilden*.*

12. Verfahren zur Herstellung einer Spannvorrichtung (20) nach Anspruch 11,
**dadurch gekennzeichnet, daß**
vor dem Herausarbeiten der mindestens einen Spannlasche (4A, 4B) aus dem Mantel (5) der Spannvorrichtung (20) die Wandstärke des Außenmantels im Bereich der Spannlasche(n) (4A, 4B) und/oder des Stegs/der Stege (7) bevorzugt durch Fräsen verringert wird.

13. Verfahren zur Herstellung einer Spannvorrichtung (20) nach Anspruch 11 oder 12
**dadurch gekennzeichnet, dass**
die zumindest eine Spannlasche (4A, 4B) in das Innere der Bohrung (3) gebogen wird, so dass die lichte Weite der Bohrung (3) durch die nach innen ragende Spannlasche (4A, 4B) geringer ist als der Durchmesser des in der Bohrung (3) aufnehmbaren Werkzeugschafts.

14. Verfahren zur Herstellung einer Spannvorrichtung (20) nach einem der Ansprüche 12 oder 13,
**dadurch gekennzeichnet, daß**
alle Verfahrensschritte an einer einzigen Maschine durchgeführt werden.

## Claims

1. A chucking device (20) for a medical treatment tool having a lateral surface (5), a bore (3) to accommodate the tool shaft of a treatment tool and at least one clamping tab (4A, 4B) which is undetachably connected to the lateral surface (5) of the chucking device (20) in at least two contact points (10A, 10B) and is bent into the interior of the bore (3), so that the inside diameter of the bore (3) is smaller than the diameter of the tool shaft due to the clamping tab (4A, 4B) protruding inward, so that a tool shaft accommodated in the bore (3) displaces the at least one clamping tab (4A, 4B) radially outward and the clamping tab (4A, 4B) locks the tool shaft in the bore (3), whereby exclusively the at least one clamping tab (4A, 4B) produces and exerts the spring effect and holding force required for securing the treatment tool,
**characterized in that**
the chucking device (20) also comprises at least one web (7) which is formed by a section of the lateral surface (5) adjacent to the at least one clamping tab (4A, 4B) and in particular stabilizes this section of the chucking device (4A, 4B).

2. The chucking device (20) according to claim 1,
**characterized in that**
the at least one clamping tab (4A, 4B) is made of a material having a tensile strength greater than 1,000 MPa and/or an elastic modulus of 110 GPa to 220 GPa, especially preferably made of stainless steel with an elastic modulus of 190 GPa to 220 GPa.

3. The chucking device (20) according to any one of the preceding claims,
**characterized in that**
it has several, preferably two, three or four clamping tabs (4A, 4B).

4. The chucking device (20) according to any one of the preceding claims,
**characterized in that** the wall thickness of the at least one clamping tab (4A, 4B) and/or of the at least one web (7) is less than in the remaining lateral surface area.

5. The chucking device (20) according to any one of the preceding claims,
**characterized in that** at least one bearing (31) for rotatable bearing of the chucking device (20) in a handpiece is attachable to the spindle (2).

6. The chucking device (20) according to any one of the preceding claims,
**characterized in that** a running wheel (33) of a turbine handpiece is attachable to the spindle (2) of the chucking device (20).

7. The chucking device (20) according to claim 6,
**characterized in that** the running wheel (33) is attached over the at least one clamping tab (4A, 4B), whereby the length H_{SPL} of the at least one clamping tab (4A, 4B) is less than the height H_{LR} of the running wheel (33).

8. The chucking device (20) according to any one of the preceding claims,
**characterized by**
at least one asymmetrically shaped clamping tab (4A, 4B).

9. The chucking device (20) according to claim 8,
**characterized in that** the apex (52) of the at least one clamping tab (4A, 4B) is situated in the upper half, in particular at approximately 2/3 of the total length of the clamping tab (4A, 4B) in relation to the orifice (34) of the chucking device (20) through which the tool is insertable into the chucking device (20).

10. The chucking device (20) according to any one of the preceding claims,
**characterized in that** the tool is released from the chucking device (20) with the help of a drill ejector (40).

11. A method for manufacturing a chucking device (20) for a medical treatment tool according to any one of the preceding claims,
**characterized in that**
by mechanical processing (machining), preferably by milling, at least two slots (6) are cut in the lateral surface (5) of the chucking device (20) so that the section remaining between the slots (6) forms a clamping tab (4A, 4B) and the sections which follow the slots (6) form a web (7).

12. The method for manufacturing a chucking device (20) according to claim 11,
**characterized in that**
the wall thickness of the outer lateral surface in the area of the clamping tab(s) (4A, 4B) and/or the web(s) (7) is reduced preferably by milling before cutting the at least one clamping tab (4A, 4B) out of the lateral surface (5) of the chucking device (4).

13. The method for manufacturing a chucking device (20) according to claim 11 or 12,
**characterized in that** the at least one clamping tab (4A, 4B) is bent into the interior of the bore (3) so that the inside diameter of the bore (3) is smaller due to the chucking tab (4A, 4B) protruding inward than the diameter of the tool shaft accommodatable in the bore (3).

14. The method for manufacturing a chucking device (20) according to any one of claims 12 or 13,
**characterized in that**
all the process steps are performed on a single machine.

## Revendications

1. Dispositif de serrage (20) pour outil de traitement médical, comportant une chemise (5), un alésage (3) destiné à recevoir la tige d'outil d'un outil de traitement et au moins une patte de serrage (4A, 4B) qui est reliée de manière inamovible, en au moins deux points de contact (10A, 10B), à la chemise (5) du dispositif de serrage (20) et est courbée vers l'intérieur de l'alésage (3), ce qui a pour effet que l'espace libre de l'alésage(3), du fait du dépassement vers l'intérieur de la patte de serrage (4A, 4B), est inférieur au diamètre de la tige d'outil, de sorte qu'une tige d'outil placée dans l'alésage (3) refoule au moins une patte de serrage (4A, 4B) radialement vers l'extérieur et que la patte de serrage (4A, 4B) bloque la tige d'outil dans l'alésage (3), tandis qu'exclusivement l'au moins une patte de serrage (4A, 4B) génère et exerce l'effet de ressort et la force de retenue nécessaires pour bloquer l'outil de traitement,
**caractérisé en ce que**
le dispositif de serrage (20) comprend en outre au moins une traverse (7) qui est constituée par une section se raccordant à l'au moins une patte de serrage (4A, 4B) de la chemise (5) et stabilise notamment cette section du dispositif de serrage (20).

2. Dispositif de serrage (20) selon la revendication 1,
**caractérisé en ce que**
l'au moins une patte de serrage (4A, 4B) est fabriquée dans un matériau ayant une résistance à la traction supérieure à 1.000 mPa et/ou un module E de 110 GPa à 220 GPa, de manière particulièrement préférentielle en acier inoxydable ayant un module E de 190 GPa à 220 GPa.

3. Dispositif de serrage (20) selon une des revendications précédentes,
**caractérisé en ce que**
il présente plusieurs, de préférence deux, trois ou quatre pattes de serrage (4A, 4B).

4. Dispositif de serrage (20) selon une des revendications précédentes,
**caractérisé en ce que**
l'épaisseur de paroi de l'au moins une patte de serrage (4A, 4B) et/ou de l'au moins une traverse (7) est plus faible que dans le reste de la chemise.

5. Dispositif de serrage (20) selon une des revendications précédentes,
**caractérisé en ce que**,
sur la broche (2) du dispositif de serrage (20), au moins un palier (31) servant à l'appui en rotation du dispositif de serrage (20) peut être fixé dans une pièce à main.

6. Dispositif de serrage (20) selon une des revendications précédentes,
**caractérisé en ce que**,
sur la broche (2) du dispositif de serrage (20), une roue (33) d'une pièce à main à turbine peut être fixée.

7. Dispositif de serrage (20) selon la revendication 6,
**caractérisé en ce que**
la roue (33) est fixée sur l'au moins une patte de serrage (4A, 4B), la longueur H_{SPL} de l'au moins une patte de serrage (4A, 4B) étant inférieure à la hauteur H_{LR} de la roue (33).

8. Dispositif de serrage (20) selon une des revendications précédentes,
**caractérisé par**
au moins une patte de serrage (4A, 4B) à conformation asymétrique.

9. Dispositif de serrage (20) selon la revendication 8,
**caractérisé en ce que**
le point sommital (52) de l'au moins une patte de serrage (4A, 4B) se trouve dans la moitié supérieure, notamment à environ 2/3 de la longueur totale de la patte de serrage (4A, 4B) par rapport à l'orifice (34) du dispositif de serrage (20) par lequel l'outil peut être introduit dans le dispositif de serrage (20).

10. Dispositif de serrage (20) selon une des revendications précédentes,
**caractérisé en ce que**
le détachement de l'outil du dispositif de serrage (20) se fait à l'aide d'un éjecteur de fraise (40).

11. Procédé de fabrication d'un dispositif de serrage (20) pour outil de traitement médical selon une des revendications précédentes,
**caractérisé en ce que**
par usinage mécanique (enlèvement de copeaux), de préférence par fraisage, on pratique au moins deux fentes (6) dans la chemise (5) du dispositif de serrage (20), de sorte que la section restant entre les fentes (6) constitue une patte de serrage (4A, 4B) et la section suivant les fentes (6) constitue une traverse (7).

12. Procédé de fabrication d'un dispositif de serrage (20) selon la revendication 11,
**caractérisé en ce que**
avant l'usinage de l'au moins une patte de serrage (4A, 4B) dans la chemise (5) du dispositif de serrage (20), l'épaisseur de paroi de la chemise extérieure est réduite au niveau de la(des) patte(s) de serrage (4A, 4B) et/ou de la(des) traverse(s) (7), de préférence par fraisage.

13. Procédé de fabrication d'un dispositif de serrage (20) selon la revendication 11 ou 12,
**caractérisé en ce que**
l'au moins une patte de serrage (4A, 4B) est courbée vers l'intérieur de l'alésage (3), de sorte que l'espace libre de l'alésage (3), du fait du dépassement vers l'intérieur de la patte de serrage (4A, 4B), est inférieur au diamètre de la tige d'outil pouvant être placée dans l'alésage (3).

14. Procédé de fabrication d'un dispositif de serrage (20) selon une des revendications 12 ou 13,
**caractérisé en ce que**
toutes les étapes opératoires sont réalisées sur une seule machine.
